# EUROPEAN PATENT APPLICATION

(11) **EP 1 248 351 A1**
(43) Date of publication of application: **09.10.2002**
(21) Application number: 99968431.9
(22) Date of filing: 30.11.1999
(51) Int. Cl.: H02K 44/08, H02K 44/26

(54) **METHOD FOR THE PRODUCTION OF ELECTRIC ENERGY AND MHD GENERATOR THEREFOR**

(30) Priority: 24.08.1999 RU 99118347
(71) Applicant: Samuel HMD Energia, 10416 Tallinn (EE)
(72) Inventor: GRITSKEVICH, Boris Olegovich, Vladivostok, 690002 (RU); GRITSKEVICH, Oleg Vyacheslavovich, Vladivostok, 690002 (RU)
(74) Representative: Brandl, Ferdinand Anton, Dipl.-Phys.
(86) International application number: RU9900462
(87) International publication number: WO01015305

(57) **Abstract**

The invention is directed at increasing output, reliability and environmental safety of MHD generators as well as at simplifying the design of said generators. The inventive method for the production of energy comprises the following steps: a polar liquid (8) is circulated in predetermined direction along a hermetically sealed toroidal channel (1) by means of a traveling magnetic field, and electric power is collected by means of electromagnetic winding. The liquid is ionized at least at the stage of launching, by means of electrodes (4), for example. The internal walls (2) of the channel have a dielectric constant which is higher than the dielectric constant of said liquid.

## Description

### Technical field

The invention relates to power engineering, namely, to producing of electric energy by means of MHD generators.

### Background art

There is a known method of producing energy (WO 90/00526, 1990), in particular thermal energy, by arranging the motion of water in a predetermined direction in a closed circuit. This method uses unique properties of water stipulating a release of energy as a result of hydrogen bonds opening. Besides, a release of electric energy along with heat one is noted. However, this method does not allow producing electric energy as suitable for use. A similar method (RU 2124681, 1999) with the use not only water but any polar liquid gives justifications of the release of additional energy of said liquid, namely, at the expense of behavior of the reaction of cold nuclear fusion and cavitational processes. Also this method is not intended for producing electric energy.

There are a device and method of producing electric energy (SU 753372, 1980; US 3496781, 1967) by arranging the motion of ferromagnetic spheroids in a predetermined direction in a closed channel, when voltage produced at the expense of electromagnetic induction is collected by means of electromagnetic windings. The device which implements the method contains a hermetically sealed toroidal channel in which there is a conducting medium as ferromagnetic spheroids and electromagnetic system with windings. The said device and method as a low efficiency factor, are rather complex and have low reliability.

The nearest analogs are a device and method of producing electric energy (RU 2071163, 1996; RU 95110712, 1997) by arranging the motion of a conducting medium in a predetermined direction in a closed channel when the produced electric energy is collected by means of electromagnetic windings. Ionized gas is issued as a conducting medium. The device which implements the method, MHD-generator, contains a closed toroidal channel with a body made of non-magnetic material, inside of which there is a dielectric cover and electromagnetic system with windings. The known method and device have a low efficiency factor, are rather complex and have low reliability. Besides, the known method is not ecologically safe.

### Disclosure of the invention

The purposes of the proposed engineering solutions are: efficiency upgrading, reliability and ecological safety growth as well as simplification of the MHD generator design.

The above said purposes are achieved as follows.

In the known method for the production of electric energy by arranging the motion of a conducting medium in a predetermined direction along a closed circuit when the produced electric energy is collected by means of electromagnetic windings, a novelty is that a polar liquid is issued as a conducting medium which is ionized at least at the stage of launching and polar liquid is circulated by means of traveling magnetic field with the help of electromagnetic exciting windings, as this takes place, the motion of the medium is arranged in a hermetic channel internal walls of which have a dielectric constant higher than the polar liquid has.

The said liquid may be ionized by high-voltage discharges or with the help of a disc made of diamagnetic material rotating inside the channel with the said liquid.

The liquid motion may be stabilized with the help of a hermetic chamber filled with polar liquid, at that, the chamber has electromagnetic windings and is attached to the channel.

If water is used as said liquid, its previous activation may be carried out by adding heavy water (deuterium and tritium).

In the above-mentioned known device of the MHD-generator which contains a toroidal channel with the body made of non-magnetic material inside of which there is a dielectric cover and electromagnetic system with windings, the novelty is that the channel is made hermetically and filled with polar liquid, and the dielectric constant of the cover is higher than the same of the said liquid.

Water which may contain heavy water (deuterium and tritium) may be used as said liquid.

The MHD-generator may contain a hermetic stabilization chamber which has conjunction with the channel placed outside it in the internal area of tore. As this takes place, the chamber may be made as a cylinder, axle of which lies in the plane of the middle axle of the toroidal channel.

The MHD-generator may contain a liquid ionization device which may be made as electrodes placed inside the channel and attached to a periodic high-voltage source, or as a diamagnetic disc placed inside the channel and cinematically attached to a rotary actuator.

The electromagnetic system may contain power windings and exciting windings which may be placed inside the channel.

Ferroelectric material may be used as a cover for the channel walls.

### Brief description of the figures in the drawings

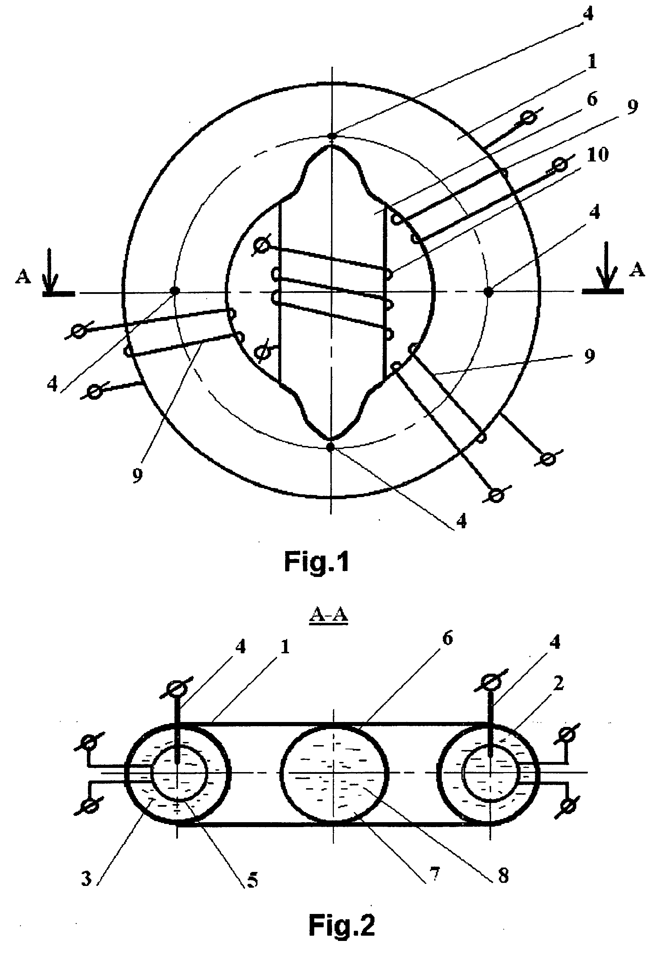

The inventions are explained by the drawing where Fig. 1 shows the overall view of the MHD-generator, Fig. 2 shows its lateral section.

### The best example for carrying out the invention

The invention is explained by the example of Gritskevich's Dynamo.

The hydromagnetic dynamo contains hollow sealed toroidal body 1 of metal ceramics the internal surface of which is covered with layer 2 of synergistic and a cavity is filled with distilled water 3 with adding heavy water. In the channel of body 1 there are electrodes 4 made of hard-alloy material connected up to capacitor bank, as well as exciting windings 5 connected up to a power source. Inside the ring of body 1 there is assembled cylindrical stabilization chamber 6 made of metal ceramics being communication with the channel of body 1. The internal surface of chamber 6 is also covered with layer 7 of synergetic and the cavity is filled with distilled water 8 with adding heavy water. Body 1 and chamber 6 have power windings 9 and 10 on the outside.

The hydromagnetic dynamo operates as follows: partially ionized water 3 (at the expense of heavy water) is ionized additionally at the expense of high-voltage discharges by electrodes 4. Traveling magnetic field is created with the help of windings 6 which creates water motion 3 in one direction in the channel of body 1. Electromotive force develops in windings 9 at the expense of electromagnetic induction. As a result of water flow motion free electrons appear and additional energy releases at the expense of friction of water 3 on layer 2 and electrostatic breakdowns of cavitational-and-vacuum structures and the existing reaction of cold nuclear fusion. At this takes place, quantity of electric energy produced on windings 9 may be greater than energy spent on ionization and acceleration of water by electrodes 4 and windings 5. At that, the proposed device and method do not contradict the energy conservation law because excess energy (in respect to input energy) releases from water 3 and internal layer 2 which should be replaced with time. Stabilization of liquid motion 3 is created at the expense of interaction of (e) discharges in it with discharges in chamber 6. In doing so, electric energy may be also collected from windings 10.

## Claims

1. The method for the production of electric energy by arranging the motion of conducting medium in a predetermined direction along a closed circuit when the produced electric energy is collected by means of electromagnetic windings, *which differs in that* polar liquid is used as a medium which is ionized at least at the stage of launching and polar liquid is circulated by means of traveling magnetic field with the help of electromagnetic exciting windings, as this takes place, the motion of the medium is arranged in a hermetic channel internal walls of which have a dielectric constant higher than the polar liquid has.

2. Method of claim 1, *which differs in that* the said liquid is ionized by high-voltage discharges.

3. Method of claim 1, *which differs in that* the said liquid is ionized with the help of a disc made of diamagnetic materials rotating inside the channel with said liquid.

4. Method of claim 1, *which differs in that* the motion of the said liquid is stabilized with the help of a hermetic chamber attached to the channel filled with polar liquid and provided with electromagnetic windings.

5. Method of claim 1, *which differs in that* water is used as a said liquid.

6. Method of claim 5, *which differs in that* the said liquid is previously activated by adding heavy water.

7. The MHD generator containing a toroidal channel with the body made of non-magnetic material inside of which there is a dielectric cover and electromagnetic system with windings, *which differs in that* the channel is made hermetically and filled with polar liquid, and a dielectric constant of the cover is higher than the polar liquid has.

8. The MHD generator of claim 7, *which differs in that* water is used as said liquid.

9. The MHD generator of claim *7, which differs in that* it contains a hermetic stabilization chamber which has a conjunction with the channel placed outside the channel in the internal area of tore.

10. The MHD generator of claim *7, which differs in that* it contains a liquid ionization device.

11. The MHD generator of claim 7, *which differs in that* the electromagnetic system with windings contains power windings and exciting windings.

12. The MHD generator of claim 7, *which differs in that* ferroelectric materials is used as said cover.

13. The MHD generator of claim *8, which differs in that* water contains heavy water.

14. The MHD generator of claim 9, *which differs in that* the chamber is made in the form of a cylinder and its axle lies in the plane of the middle axle of the toroidal channel.

15. The MHD generator of claim 10, *which differs in that* said device is made in the form of electrodes placed inside the channel and connected with a periodic high-voltage source.

16. The MHD generator of claim 10, *which differs in that* said device is made in the form of even if one disc made of diamagnetic material placed inside the channel and cinematically attached to a rotary actuator.

17. The MHD generator of claim 11, *which differs in that* the exciting windings are placed inside the channel.
